# EUROPEAN PATENT APPLICATION

(11) **EP 2 401 983 A1**
(43) Date of publication of application: **04.01.2012**
(21) Application number: 11172449.8
(22) Date of filing: 01.07.2011
(51) Int. Cl.: A61C 8/00, A61C 7/00

(54) **Orthodontic anchoring screw and process for making it**

(30) Priority: 02.07.2010 IT PD20100207
(71) Applicant: Vigolo, Valter, 35036 Montegrotto (Padova) (IT)
(72) Inventor: Vigolo, Valter, 35036 Montegrotto (Padova) (IT)
(74) Representative: Gallo, Luca

(57) **Abstract**

Orthodontic anchoring screw, which comprises a threaded shank (2), having prevalent extension along a longitudinal axis (Z) and intended to be screwed into a bone tissue. The anchoring screw (1) also comprises a head (3), in a single body with the threaded shank (2) and provided with at least one seat (5), which extends substantially along a housing direction (X) perpendicular to the longitudinal axis (Z) of extension of the threaded shank (2), and it is intended to house a metallic wire (7) capable of imposing a correction action on at least one incorrectly positioned tooth (4).

The head (3) is provided with engagement means (8), suitable for holding the metallic wire (7) in the seat (5), which comprise at least two shaped appendages (9) extending from a common base (18), each with a shaped shank (13) having a widened head (14) fixed on top.

The widened heads (14) of the shaped appendages (9) define a slit (6) at the top between them for the insertion of the metallic wire (7), said slit (6) having prevalent extension along a transversal direction (Y), perpendicular to the longitudinal axis (Z) of extension of the threaded shank (2) and inclined with respect to the housing direction (X) of the seat (5). The shaped shanks (13) of the appendages (9), together with the widened heads (14), define the seat (5), which is in communication with the slit (6) to receive the metallic wire (7).

## Description

### Field of application

The present invention concerns an orthodontic anchoring screw and a process for making it according to the preamble of the respective independent claims.

The screw in question is intended to be used in the field of orthodontics, in particular to provide a fixed extradental anchoring point of orthodontic apparatuses, in order to determine the displacement of one or more incorrectly positioned teeth and their alignment in the correct position.

The present invention, therefore, inserts into the field of dental orthodontics, i.e. the branch of orthodontics dealing with the prevention and cure of malocclusions and, more generally, of positioning anomalies of teeth.

### State of the art

In orthodontic practice it is common to use apparatuses for correcting malocclusions and in general for correcting positioning defects of the teeth. Such defects, indeed, are the cause of discomfort for the patient, since they can cause alterations in the appearance of the face and at the same time they can have a negative impact upon the breathing, chewing and speaking functions.

Operatively, orthodontic apparatuses are suitable for exerting a traction or thrusting force on one or more teeth, in order to gradually move them over time into the correct position. The orthodontic apparatuses conventionally used can be of the mobile type or of the fixed type and they are designed *ad hoc* for the individual patient, in relation to the specific treatment objective.

In the case of big positioning anomalies of the teeth, it is generally preferable to use fixed apparatuses.

These comprise a plurality of attachments glued or cemented to the teeth, and a plurality of mechanical traction and/or pushing elements, for example consisting of elastic metallic wires, or hooks, fastened to the incorrectly positioned teeth through the aforementioned attachments and secured to suitable anchors to apply traction and/or pushing forces to one or more teeth in order to take them into the correct positions. Recently, intraoral type anchors have been developed, which foresee the use of extradental anchoring screws fixed to the bone tissue. These are equipped with a threaded shank and with a head on which engagement means are arranged that are able to receive and hold a metallic wire, capable of imparting a corrective action on the tooth that must be repositioned, or on the teeth that must be repositioned.

The anchoring screws are intended to be positioned inside the oral cavity, in the palatine vault, i.e. in the interadicular space between two adjacent teeth, with the threaded shank inserted in the bone tissue and the head projecting from the latter. When the screw is osseointegrated, traction and/or pushing forces even of substantial strength can be applied on it, without it undergoing movements.

Patent WO 02/03880 describes an example of an orthodontic anchoring screw, which comprises a head equipped with a lower portion, which extends from the threaded shank, and of a widened upper portion on which there are two notches formed from its front surface, perpendicular to one another and perpendicular to the main axis of extension of the screw. In particular, a first notch is suitable for receiving a metallic wire, whereas the second notch is suitable for receiving the tip of a screwdriver to screw and unscrew the screw into a from the bone tissue. The metallic wire is held inside the first notch through binding means, like for example a thin binding wire, which are stretched around the lower portion of the head of the screw.

The anchoring screw briefly described above has in practice proven to be not without drawbacks. Firstly, the binding operation of the metallic wire to the head of the screw carried out through the binding wire is complicated and laborious to carry out for the orthodontist. Moreover, the free ends of the binding wire project from the head of the anchoring screw and can cause discomfort and/or lesions to the tongue or to the oral mucosa of the patient.

For example patent IT 1307114 discloses an orthodontic anchoring screw, which is equipped with a head provided with a lower portion, which extends from the threaded shank, and with an upper portion on which there are gripping means for a tool suitable for screwing and unscrewing the screw into and from the bone tissue, for example consisting of one or more notches suitable for receiving a screwdriver. In the lower portion of the head there are engagement means for a metallic wire suitable for exerting a corrective stress on one or more teeth. In greater detail, such engagement means comprise a peripheral groove, in which the metallic wire can be wound and fixed, and two through holes, perpendicular to each other and perpendicular to the main axis of extension of the screw in which the metallic wire is inserted, to ensure better fixing of the latter to the head of the screw.

However, the known anchoring screw described above has some drawbacks.

Firstly, such an anchoring screw is difficult to use. Indeed, it is complicated and laborious for the orthodontist to insert the metallic wire in one of the through holes of the head of the anchoring screw and then bend it back inside the peripheral groove, given the small size of the screw itself and given the difficult-to-reach position in which it is generally screwed inside the oral cavity of the patient.

Moreover, the gripping means foreseen on the upper part of the head of the screw can cause discomfort to the patient when it comes into contact with the tongue or with the oral mucosa and in the long term it can cause lesions or sores.

Patent US 2004/0152035 describes an orthodontic anchoring screw, which has been designed to avoid the aforementioned drawback. Such an anchoring screw comprises a head equipped with a conical-shaped lower portion, extending from the threaded shank and having a tapered shape in the direction of the latter, with a central portion, equipped with gripping means of a tool suitable for screwing and unscrewing the screw into and from the bone tissue, and with an upper portion equipped with two notches formed from its surface. Such notches are perpendicular to each other and perpendicular to the main axis of extension of the screw and they are intended to receive a metallic wire. In order to prevent the discontinuities on the surface of the head of the screw from being able to cause lesions on the tongue or on the oral mucosa of the patient and in order to avoid the metallic wire inserted inside the notches from being able to poke out from the head of the screw, the latter had an adhesive compound applied to it that is subsequently cross-linked and set, for example through the application of ultraviolet radiation.

The orthodontic anchoring screw described above, however, cannot be easily removed, and the metallic wire inserted inside the notches cannot be repositioned during treatment, since the head of the screw is entirely covered by the adhesive compound. Therefore, in order to proceed to the removal of the metallic wire from the notches of the screw, i.e. to act on the gripping means to unscrew the anchoring screw, it is necessary to firstly remove the adhesive compound applied and cross-linked on the head of the screw. This anchoring screw is complex for the orthodontist to install.

Patent WO -A- 2010/076328 discloses an orthodontic anchoring screw comprising a threaded shank and a head fixed to the shank, provided with a seat perpendicular to the axis of extension of the shank, intended to house an orthodontic wire capable of imparting a corrective action to an incorrectly positioned tooth. The screw also comprises a shaped body inserted in a housing of the head and free to rotate inside such a housing to stop the wire in the seat. The shaped body is provided on top with a through opening for the insertion of the orthodontic wire. Operatively, once the wire has been inserted in the through opening of the shaped body aligned with the seat of the head of the screw, the shaped body is made to rotate so that the wire rotates in a horizontal slot formed in the shaped body until it reaches the bottom of the slot. The mobile shaped body therefore holds the orthodontic wire in the seat. The housing seat of the wire is jointly defined by the longitudinal slot formed in the head and by the shaped slot, formed in the shaped body, coupled with the head, which vary their mutual position to allow the orthodontic wire to be inserted and stopped. The orthodontic wire is not locked by deformation having to reach the housing direction of the seat, but rather, thanks to the rotation of the shaped body and only through such a rotation, it reaches the housing direction of the seat. The aforementioned screw is therefore complex to make, requiring the production of many distinct elements and their assembly and operatively it is not at all reliable since it has mutually moving members.

### Disclosure of the invention

The problem forming the basis of the present invention is therefore to avoid the drawbacks of the known solutions quoted above, by providing an orthodontic anchoring screw, which is easy to use.

Another purpose of the present finding is to provide an orthodontic anchoring screw, which allows orthodontic apparatuses to be made that are easy to install inside the oral cavity of a patient.

A further purpose of the present finding is to provide an orthodontic anchoring screw, which makes it possible to easily carry out adjustment operations of the orthodontic device or of its parts, to vary the corrective action applied on the incorrectly positioned teeth, during orthodontic treatment.

Another purpose of the present finding is to provide an orthodontic anchoring screw that is totally safe for the patient, i.e. that does not cause lesions or sores to their tongue or oral mucosa.

A further purpose of the present finding is to provide an orthodontic anchoring screw that is constructively cost-effective to make, simple to install and operatively totally reliable. Another purpose of the present finding is to provide a process for making an orthodontic anchoring screw that is simple and cost-effective.

### Brief description of the drawings

The technical characteristics of the invention, according to the aforementioned purposes, can be found in the content of the claims given below and the advantages thereof will become clearer in the following detailed description, made with reference to the attached drawings, which represent some embodiments thereof, given purely as examples and not for limiting purposes, in which:
- figures 1 and 2 show two perspective views from above of an orthodontic anchoring screw according to the present invention, in accordance with a first embodiment;

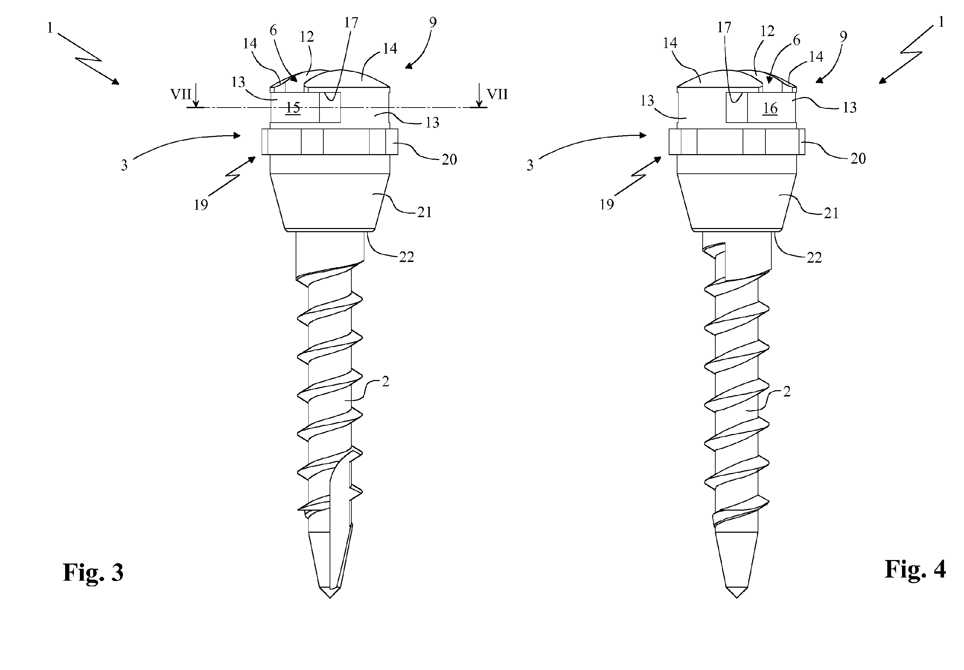

- figure 3 shows a first side view of the anchoring screw of figure 1;
- figure 4 shows a second side view of the anchoring screw of figure 1, according to a different angle with respect to the screw illustrated in Figure 3;
- figures 5 and 6 show two views from above of the anchoring screw of figure 1, in two different positions, rotated by 90° with respect to one another;
- figures 7 and 8 show two section views of the anchoring screw carried out along the line VII-VII of figure 3, in the two different positions of figures 5 and 6, rotated by 90° with respect to one another;
- figures 9 and 10 show two perspective views from above of an orthodontic anchoring screw according to the present invention, in accordance with a second embodiment;
- figure 11 shows a view from above of the orthodontic anchoring screw illustrated in Figures 9 and 10;
- figure 12 shows the orthodontic anchoring screw according to the present invention, in accordance with the first embodiment, in a first possible configuration of use;

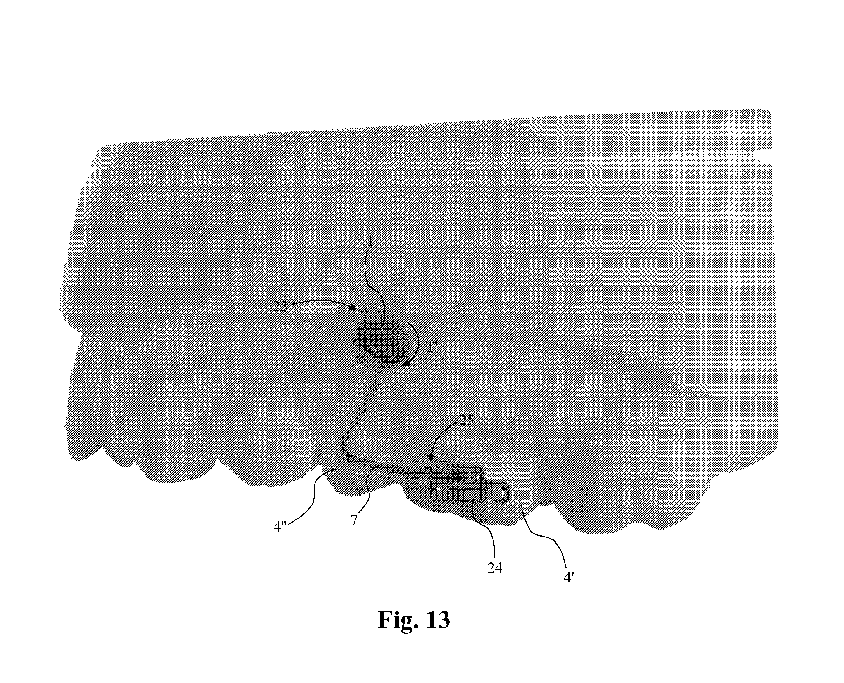

- figure 13 shows the orthodontic anchoring screw according to the present invention, in accordance with the first embodiment, in a second possible configuration of use;
- figures 14a - 14l illustrate some steps of a process for making an orthodontic anchoring screw according to the present invention;
- figure 15 illustrates in detail a first and a second stage of a second, or of a third, milling step of the process for making an orthodontic anchoring screw according to the present invention.

### Detailed description

In accordance with the figures of the attached drawings, the orthodontic anchoring screw object of the present finding has been wholly indicated with 1.

The screw 1 in object is intended to be used as an anchor in fixed apparatuses for correcting misalignments of the upper and lower dental arches and it is foreseen in a versatile manner for use both in vestibular apparatuses and in lingual apparatuses. In greater detail, the screw 1 is suitable for being fixed inside the oral cavity of a patient, in particular screwed into the bone tissue of the palatine vault, i.e. in the maxilla or mandible bone tissue in the interadicular space between two adjacent teeth. For this purpose, the anchoring screw 1 is advantageously made from a biocompatible and corrosion-resistant metallic material. Preferably, the anchoring screw 1 object of the present invention is made from titanium or an alloy thereof, or else from a stainless steel suitable for making medical products, like for example stainless steel 316.

The anchoring screw 1 is intended to be used in association with one or more orthodontic attachments 24, each fixed to a tooth 4 on which it is wished to impart a corrective action, and in association with one or more metallic wires 7, each of which is engaged at the anchoring screw 1 and at at least one orthodontic attachment 24. Operatively, each metallic wire 7 exerts a traction or pushing stress on the corresponding screw 1 and on the corresponding orthodontic attachment 24 in order to make the tooth 4 (or teeth), to which such an attachment 24 is fixed, move over time. In greater detail, the screw 1 constitutes a fixed anchoring point and can be elastically stress in traction and/or in pushing and/or in rotation by the metallic wire 7, without undergoing movements, rotations or giving signs of mobility in general.

The metallic wire 7 can for example consist of a wire made from nickel-titanium, nickel-titanium copper, steel, a shape memory metallic alloy or another material, it can be obtained with a single wire or with many interlaced wires, it can be modelled with variable finish and shape, in particular it can have a round, rectangular or square section, according to specific application requirements, it can have so-called superelastic properties, i.e. temperature-dependent elasticity. The metallic wire 7, in particular, can be shaped as desired to be engaged at the anchoring screw 1, object of the present invention, and at the orthodontic attachment 24 fixed to the tooth 4 and to impart, through its elastic return force, a corrective action on the tooth 4. In greater detail, the metallic wire 7 can for example be equipped with bends or coils, in order to increase the elastic return force exerted on the orthodontic attachment 24, or on the tooth 4.

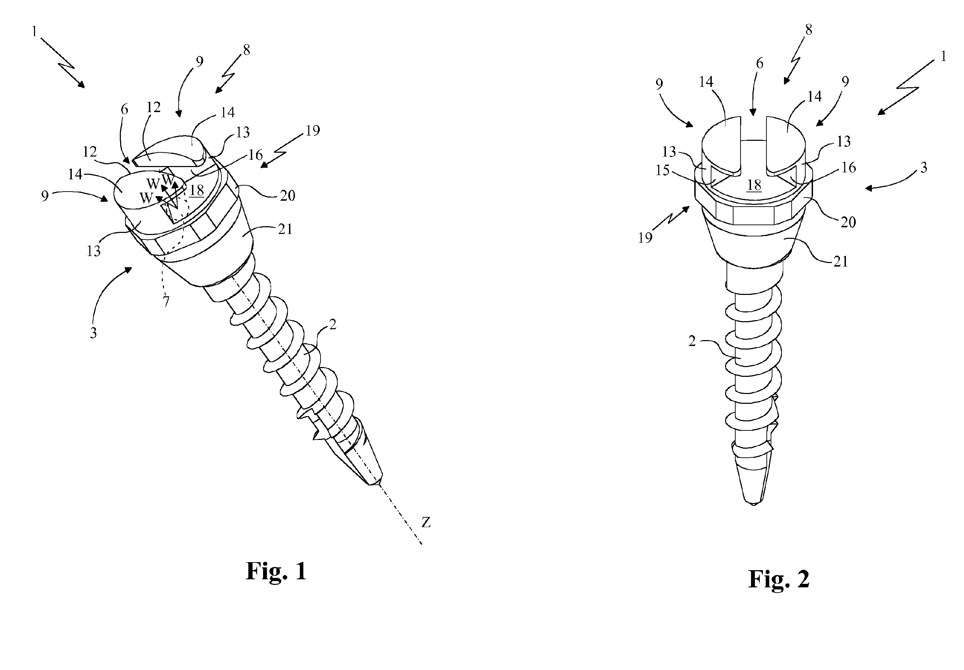

With particular reference to figure 1, the orthodontic anchoring screw 1 comprises a threaded shank 2, which has a prevalent extension along a longitudinal axis Z and it is intended to be screwed into a bone tissue inside the oral cavity of the patient. Advantageously, the screw 1 can be self-threading or, preferably, self-tapping, so that it is not necessary to make a pilot hole in the bone tissue before proceeding to insert the screw 1 itself in the latter. This makes it easier to install the anchoring screw 1 and at the same time allows the intervention times to be reduced.

The screw 1 also comprises a head 3, made in a single body with the threaded shank 2, which is provided with one or more seats 5, advantageously with two seats 5' and 5", able to receive the metallic wire 7 capable of imparting a corrective action on one or more incorrectly positioned teeth 4 inside them. Each seat 5, in particular, extends substantially along its own housing direction X (respectively a first and a second housing direction X' and X"), perpendicular to the longitudinal axis Z of extension of the threaded shank 2.

The head 3 of the anchoring screw 1 is connected to the threaded shank 2 through a connection portion 21, tapered in the direction of the threaded shank 2. In greater detail, the connection portion 21 is joined to the threaded shank 2 through an annular surface 22 substantially perpendicular to the latter, which defines an end stop for the screwing of the screw 1 in the bone tissue. More clearly, when the screw 1 is screwed into the bone tissue, the annular surface 22 is intended to go into abutment against the latter, in order to prevent the head 3 of the screw 1 from being able to sink into it. The tapered connection portion 21 is able to insert in the oral mucosa when the threaded shank 2 is screwed into the bone tissue, so that just a small portion of the head 3 of the anchoring screw 1 pokes out from the oral mucosa. In this way, the anchoring screw 1 is minimally visible and does not cause any discomfort to the patient.

In order to allow the screw 1 to be screwed into the bone tissue, the head 3 is provided with gripping means 19 for a tool suitable for screwing and unscrewing the anchoring screw 1 into and from the bone tissue. Such gripping means 19 preferably comprise a portion with polygonal section 20, suitable for receiving a respective tool, like for example a key, in shape engagement.

The head 3 is provided with engagement means 8, suitable for holding the metallic wire 7 inside one of the two seats 5 formed in it.

In accordance with the idea forming the basis of the present invention, the engagement means 8 comprise two or more shaped appendages 9, which extend from a common base 18, each with a shaped shank 13 having a widened head 14 fixed to the upper end. According to a preferred embodiment of the anchoring screw 1 object of the present invention, the engagement means 8 comprise two shaped appendages 9, which are fixed with respect to the head 3 and do not comprise mobile elements.

The widened heads 14 of the two appendages 9 define a slit 6 between them, through two opposite faces 12, said slit 6 extending prevalently along a transversal direction Y, perpendicular to the longitudinal axis Z of extension of the threaded shank 2, and it is intended to have the metallic wire 7 pass through it for its insertion into one of the two seats 5.

The shaped shanks 13 of the two appendages 9 define, together with the widened heads 14 and the base 18, the two seats 5, without any other elements and in particular other mobile elements participating in defining the two seats 5 in which the metallic wire 7 is to be inserted and held. Each of the seats 5 is always in constant communication (in any operative position) with the slit 6 for the passing of the metallic wire 7 and for its insertion in the respective seat 5. The housing direction X in which the seat 5 extends is inclined with respect to the transversal direction Y in which the slit 6 extends.

In greater detail, the widened heads 14 of the appendages 9 are each provided with one or more holding portions 10, which extend above the seats 5. Advantageously, each widened head 14 is provided with two holding portions 10' and 10", each intended to hold the metallic wire 7 on top inside one of the two seats 5. For this purpose, the holding portions 10 are able to interfere with the metallic wire 7, arranged in the seat 5, along at least one engagement direction W, having at least one component parallel to the longitudinal axis Z of extension of the threaded shank 2 of the screw 1, as illustrated in Figure 1.

Each holding portion 10 partially defines the seat 5 through a lower face 17, having a substantially triangular shape, facing directly towards the common base 18.

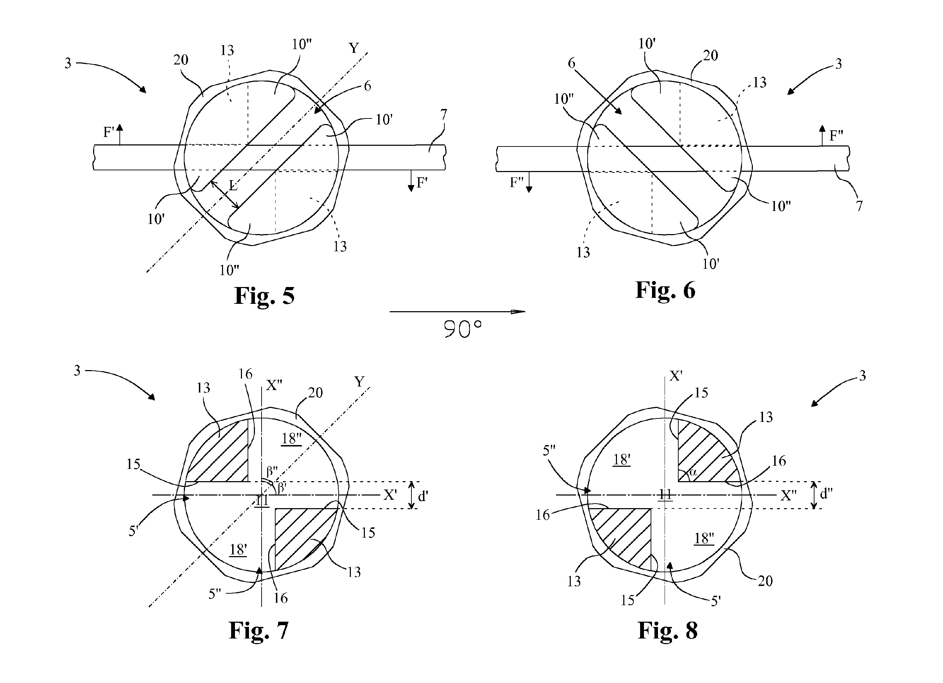

As highlighted in figures 5 and 6, each appendage 9 is provided with a first holding portion 10', which extends partially above the first seat 5', and with a second holding portion 10" that extends partially above the second seat 5". .

Advantageously, the shaped shank 13 of each appendage 9 is equipped with a first side wall 15 and with a second side wall 16 substantially parallel respectively to the first side wall 15 and to the second side wall 16 of the other appendage 9. According to a preferred embodiment of the present invention, illustrated in the attached figures, each shaped shank 13 has a cross section having a substantially triangular shape with the first and the second side walls substantially flat. Otherwise, the first side wall 15 and the second side wall 16 of each shaped shank 13 can be curved or have an irregular shape, without for this reason departing from the scope of protection of the present patent document.

The seat 5 is defined by a pair of side walls each belonging to a distinct shaped shank 13 3 of the two appendages 9, and preferably by a pair of parallel walls, one belonging to one appendage, the other belonging to the other.

In particular, in accordance with the preferred embodiment illustrated in the attached figures and as stated earlier, the head 3 of the screw 1 is provided with two seats: the first seat 5', defined by a first pair of first parallel side walls 15 of the two shaped shanks 13, and the second seat 5", defined by a second pair of second parallel side walls 16 of the two shaped shanks 13. The first seat 5' and the second seat 5" are able to selectively receive the metallic wire 7 inside them, respectively along a first housing direction X' and along a second housing direction X" .

Advantageously, the first side wall 15 and the second side wall 16 of each shaped shank 13 are contiguous and jointly define an angle a. In accordance with the preferred embodiment illustrated in the attached figures, the angle α is 90°. Otherwise, such an angle can be greater and in any case preferably less than 135° so that the lower faces 17 of the holding portions 10 of the appendages 9 extend far enough to securely hold the metallic wire 7 inside the seat 5.

Each seat 5 is therefore defined at the bottom by the common base 18, at the sides by a pair of side walls 15 or 16, advantageously parallel, of the shaped shanks 13 of the two appendages 9, and at the top by the lower faces 17 of the holding portions 10 of the two appendages 9 associated with the corresponding side walls 15 or 16. The metallic wire 7, when arranged in operative position inside an appliance mounted in the mouth of the patient, works resting on a pair of side walls 15 or 16 of the two appendages 9, consequently generating a twisting moment on the screw 1, with left-handed or right-handed direction, according to the seat 5 engaged by the metallic wire 7, i.e. according to the pair of side walls 15 or 16 on which the metallic wire 7 is elastically arranged to push.

In order to go from one seat to the other, the metallic wire 7 must leave the support from a pair of side walls 15 or 16, come out from under the lower faces 17 of the holding portions 10 (of the two appendages 9) associated with such a seat, and transfer under the lower faces 17 of the holding portions 10 associated with the other seat, resting against the pair of side walls 16 or 15 defining the other seat.

For example, in order to go from the first seat 5' to the second seat 5", the metallic wire 7 must leave the support from the pair of first side walls 15, come out from under the lower faces 17 of the holding portions 10' associated with the first seat 5', and transfer under the lower faces 17 of the holding portions 10" associated with the second seat 5", resting against the pair of second side walls 16.

The position of one seat or the other can be selected by rotating the head 3 of the screw 1 into the most suitable position.

The first housing direction X' of the first seat 5' and the second housing direction X" of the second seat 5" define, with the transversal direction Y of extension of the slit 6, two equal acute angles β' and β", preferably each of 45°. Otherwise, if the angle a defined by the first wall 15 and by the second wall 16 of the shaped shank 13 is greater than 90°, the acute angles β' and β" will be less than 45°.

As can be observed in figures 1 and 5-8, the first seat 5' and the second seat 5" jointly define a widened seat defined at the bottom by the common base 18 of the appendages 9, at the side by the first side walls 15 and by the second side walls 16 of the two shaped shanks 13 and at the top by the lower faces 17 of the holding portions 10 of the two appendages 9.

The common base 18 is made up of a first widened area 18' and of a second widened area 18", which gradually linearly taper towards a central area 11 arranged connecting the two widened areas 18' and 18". The aforementioned central area 11 is passed over by the slit 6 and consequently, at such a central area 11, the engagement means 8 do not act while gripping on to the metallic wire 7, arranged in the first seat 5' or in the second seat 5".

In order to facilitate the introduction of the metallic wire 7 into the first seat 5', or into the second seat 5", the distance L between the two opposite faces 12 of the two appendages 9, which define the slit 6 for accessing the seats 5, is greater than the distance d between the first side walls 15 of the two appendages 9 and with respect to the distance d' between the second side walls 16 of the two appendages 9, which respectively define the first seat 5' and the second seat 5".

As stated earlier, the metallic wire 7 is engaged at the anchoring screw 1 and at one or more orthodontic attachments 24 fixed to the incorrectly positioned teeth 4, on which it is wished to impart a corrective stress. The metallic wire 7 is shaped by the orthodontist according to the specific treatment objective. In particular, the wire 7 is elastically loaded between the orthodontic screw 1 and the attachment 24 of the tooth 4, so as to impart, with its elastic reaction, at least one corrective force on the incorrectly positioned tooth 4, or on the incorrectly positioned teeth 4. Such an engagement of the metallic wire 7 in the seat 5 produces a twisting moment T on the anchoring screw 1.

In greater detail, with reference to the example of the attached figures, the metallic wire 7 imparts a negative twisting moment on the anchoring screw 1, i.e. it biases the screw 1 to rotate in the clockwise direction, when it is positioned inside the first seat 5', and it imparts a positive twisting moment on the anchoring screw 1, i.e. it biases the screw 1 to rotate in the anti-clockwise direction, when it is positioned inside the second seat 5".

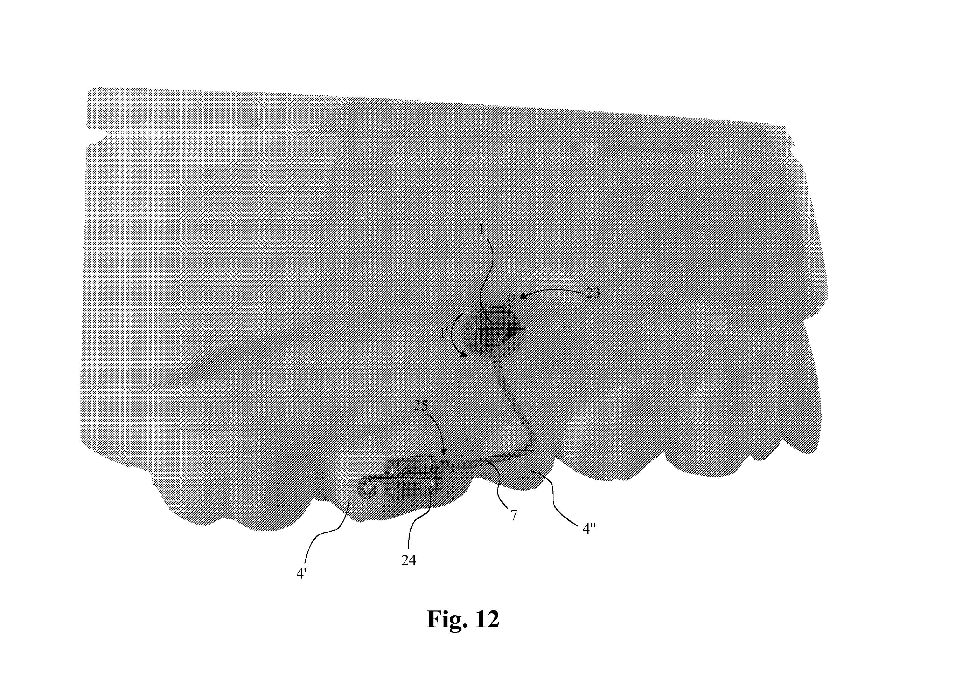

In the example of figure 12, an orthodontic apparatus is used to distalise the molars of the upper right arch. For this purpose, an orthodontic attachment 24 is fixed to the first molar 4' and the anchoring screw 1 is screwed into the maxilla bone tissue, in the interadicular space between the second premolar 4" and the first molar 4'. The metallic wire 7 is secured at a first end thereof 23 to the anchoring screw 1 and is inserted into a suitable groove foreseen in the orthodontic attachment 24. The wire 7 is in particular arranged in the second seat 5" of the screw 1 and its first end 23 is advantageously bevelled, rounded or wound on itself, in order to avoid causing discomfort to the patient.

The metallic wire 7 is also preferably equipped with a stop 25, for example consisting of a V-shaped bend or a loop, suitable for preventing it from sliding inside the groove of the orthodontic attachment 24. The metallic wire 7 is connected to the screw 1 and to the attachment 24 through elastic deformation, in order to impart, through its elastic return force, a pushing stress on the first molar 4' away from the second premolar 4". In the position illustrated in Figure 12, the metallic wire 7 imparts a positive twisting moment T on the anchoring screw 1, biasing the latter to rotate in the anti-clockwise direction.

Based on the specific therapy requirements, i.e. based on the position of the incorrectly positioned teeth 4 on which it is wished to impart a corrective stress (or according to whether they belong to the upper or lower arch, to the right or left half-arch) and based on the position in which the screw 1 is fixed to the bone tissue with respect to the incorrectly positioned teeth 4, the metallic wire 7 can be arranged by the orthodontist in the first seat 5', or in the second seat 5", of the anchoring screw 1.

The anchoring screw 1 according to the present invention, therefore, can be used as a fixed anchoring point in the upper or lower arch, in the right or left half-arch, to apply corrective stresses on teeth that are in withdrawn position or in advanced position with respect to it, selecting the most suitable seat 5 in which to arrange the metallic wire 7, with the elastic compression aimed to correctly move the tooth 4.

Moreover, the intensity of the corrective stress transmitted by the metallic wire 7 to the incorrectly positioned tooth 4 can also be partially modulated by varying the inclination of the seat 5 in which the metallic wire 7 is inserted, or through greater or lesser screwing of the anchoring screw 1 in the bone tissue. Consequently, based on the inclination of the seat 5 in which it is inserted, the metallic wire 7 will impart, by reaction, a twisting moment of different intensity on the anchoring screw 1.

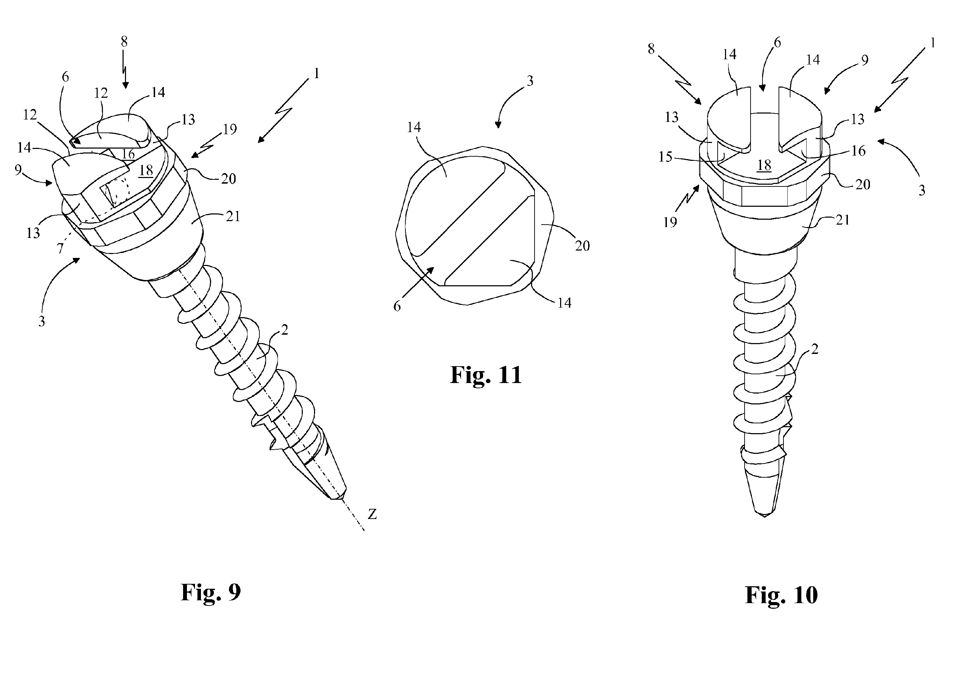

In accordance with a second possible embodiment of the anchoring screw 1 object of the present invention, illustrated in figures 9-11, the two appendages 9 and, in particular, the widened heads 14 of the two appendages 9, whilst still keeping their functionality unchanged, have a shape in plan that is slightly different with respect to one another, as can be seen in particular in figure 10. Such a different shape of the appendages 9 allows the orthodontist to immediately be aware of the degree of rotation of the anchoring screw 1, during the screwing of the latter into the bone tissue.

Operatively, the anchoring screw 1 is screwed into the bone tissue inside the oral cavity in the desired position, stopping the screwing when the selected seat 5, in which the metallic wire 7 is to be introduced, has the desired inclination for the positioning of the wire 7 with the correct elastic stress on the attachment 24 of the tooth 4 and on the screw 1. The metallic wire 7 is introduced in the selected seat 5 of the screw 1 through the slit 6. In particular, after the introduction of the metallic wire 7 in the slit 6, a rotation thereof in the clockwise direction allows it to be housed in the first seat 5', whereas a rotation in the anti-clockwise direction allows it to be housed in the second seat 5". The passage of the metallic wire 7 from the slit 6 to the seat 5, determines the locking of the metallic wire inside the seat 5 itself. In passing from the slit 6 to the seat 5, indeed, the metallic wire 7 is positioned under two holding portions 10 of the widened heads 14 of the appendages 9, with the lower faces 17 of the same portions 10 constraining the wire 7 against movements along operative directions interfering with the faces themselves and generically indicated with W in figure 1.

Advantageously, the anchoring screw 1 described above is practical and quick to use since, unlike the anchoring screws found on the market up to now, it allows the metallic wire 7 to be locked without the need to use laborious bindings.

Moreover, the anchoring screw object of the present invention makes it possible to replace or reposition the metallic wire 7 used during the therapy in a totally easy way. Furthermore, the anchoring screw 1 object of the present invention can be easily removed and repositioned during the orthodontic treatment, having gripping means 19 that can be easily reached with a tool.

The object of the present invention is also a process for making an orthodontic anchoring screw 1, in particular of the type described above, for which the same reference numerals will be kept hereafter for the sake of simplicity of presentation.

Such a process comprises the operative steps described hereafter.

Firstly there is a step of providing a shaft, preferably cylindrical, made from metallic material, having prevalent extension along a longitudinal axis Z. In greater detail, such a metallic shaft comprises a first portion 26 and a second portion 27, which is arranged in continuity with the first portion 26. The latter is equipped with an end face 28, substantially perpendicular to the axis of longitudinal extension Z of the metallic shaft and obtained through the cutting of a piece of the shaft itself.

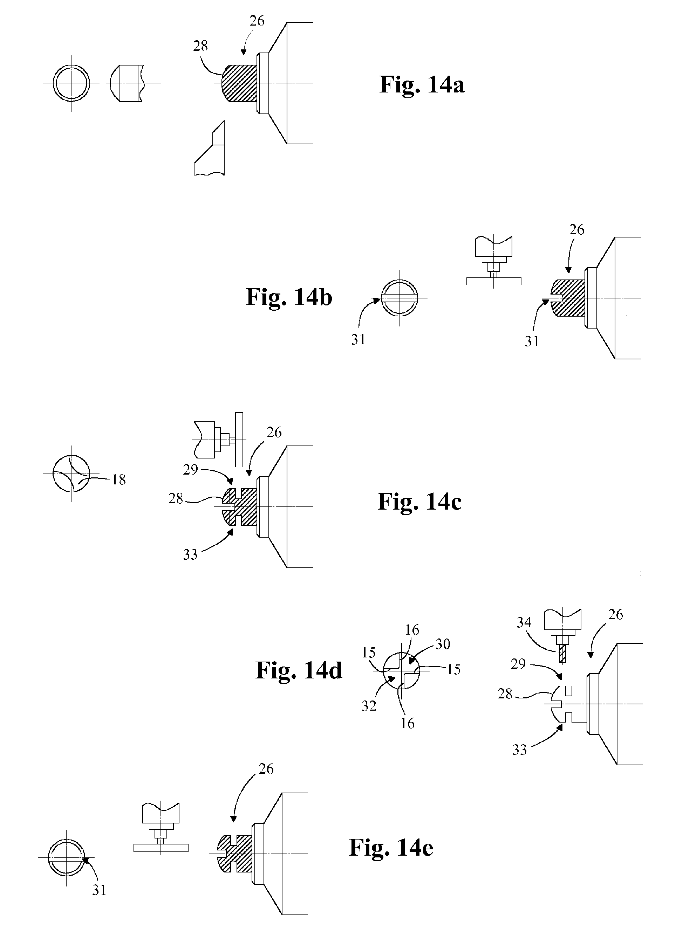

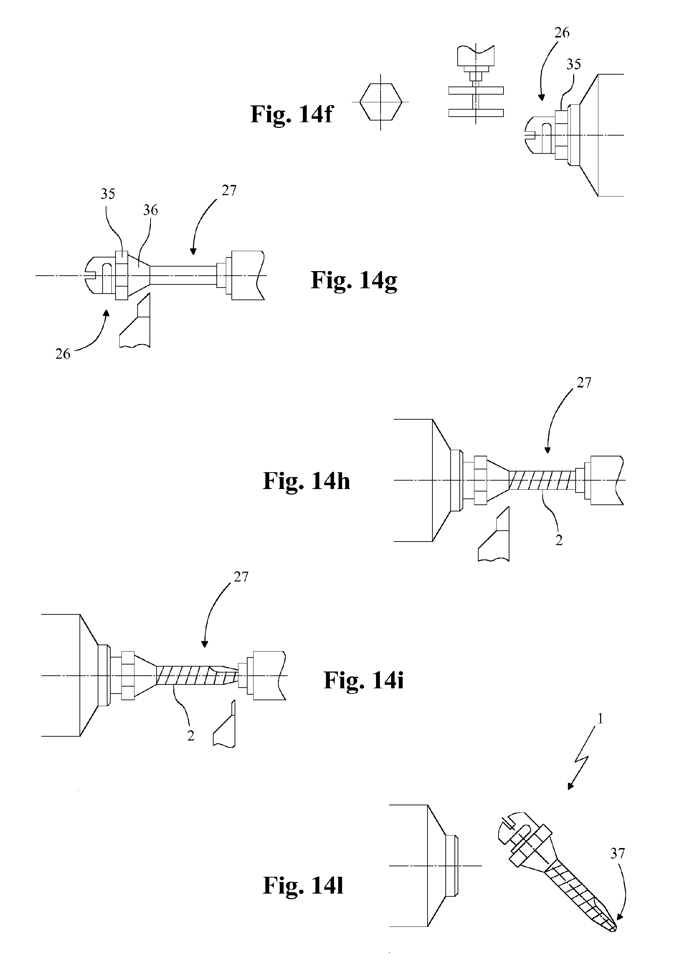

Advantageously, it is foreseen for there to be a step of beveling the first portion 26 of the metallic shaft, illustrated in figure 14a, during which the end face 28 of the first portion 26 of the metallic shaft is beveled, in order to avoid sharp edges that could cause discomfort to the patient from being in the finished product, or in the anchoring screw 1. There is also at least one first step of milling the first portion 26 of the metallic shaft, from its end face 28, during which a notch 31 is made through a first milling carried out along a first plane parallel to the longitudinal axis Z of extension of the metallic shaft and centred on it, as illustrated in figure 14b.

There is also a second step of milling the first portion 26 of the metallic shaft, made from a first side portion thereof 29, close to the aforementioned end face 28. During such a milling step, illustrated in figure 14d, a first recess 30 in communication with the notch 31 made during the first milling step is formed, with at least one second milling carried out along a second plane perpendicular to the aforementioned first plane.

In a third step of milling the first portion 26 of the metallic shaft, carried out from a second side portion thereof 33 opposite the first, a second recess 32 in communication with the first recess 30 and with the notch 31 is formed, with at least one third milling carried out along the second plane, as illustrated in figure 14d. The first recess 30 and the second recess 32 are thus defined by a common base 18, perpendicular to the longitudinal axis Z, as well as each by one or more side walls 15 or 16 (preferably they are each defined by two side walls 15 and 16) extending from the common base 18 in the direction of the longitudinal axis Z of prevalent extension of the metallic shaft, and respectively by one or more lower faces 17 (preferably two lower faces 17), which extend transversally from the side walls 15 or 16 according to a plane parallel to the base 18.

Preferably, the second and third milling step are each preceded by a roughing step, illustrated in figure 14c, through which the first recess 30, or the second recess 32, is formed in an incomplete manner.

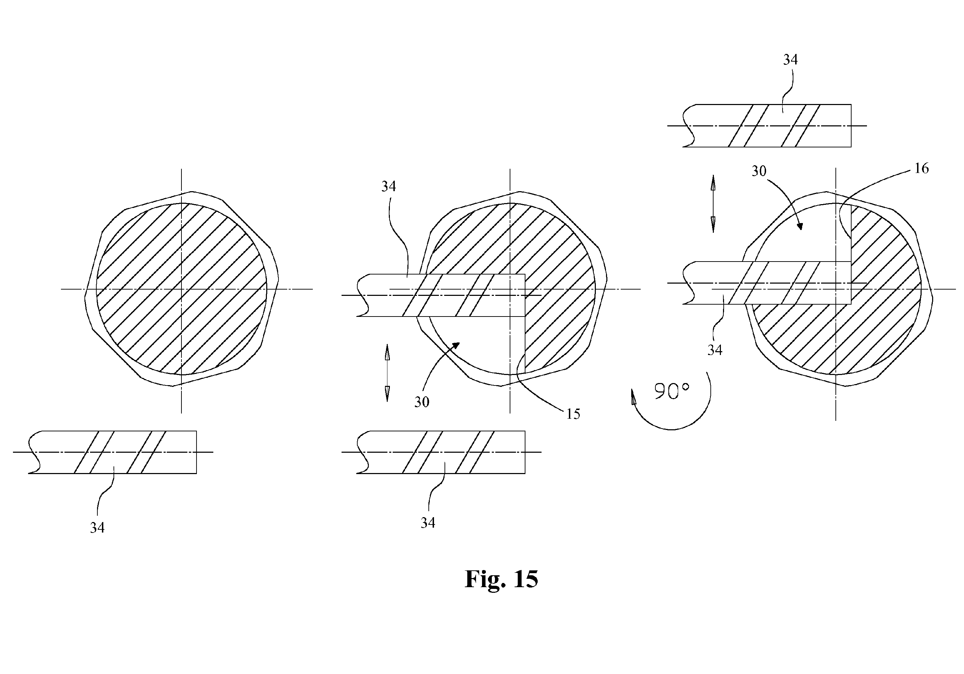

Advantageously, the second milling step is carried out in two stages, illustrated in figure 15. In a first stage, a milling cutter 34, in particular of the slot mill type, digging out the first portion of the metallic shaft, creates the first side wall 15 defining the first recess 30. In a second stage, following a rotation of the metallic shaft about its axis of longitudinal extension Z, preferably by an angle of 90°, the same milling cutter 34 creates the second side wall 16 defining the first recess 30. Otherwise, the first and the second stage of the second milling step can be carried out through a movement of the milling cutter 34 from a first position, in which it creates the first side wall 15, to a second position, advantageously arranged at 90° with respect to the first position, in which the milling cutter 34 creates the second side wall 16 of the first recess 30. Otherwise again, the first and the second stage of the second milling step can be carried out through two different milling cutters, advantageously arranged 90° apart from one another.

In a totally analogous way, the third milling step is advantageously carried out through a third and a fourth stage, during which the milling cutter 34 respectively creates the first side wall 15 and the second side wall 16 defining the second recess. Of course, the sequence with which the first, second, third and fourth stage of the second and third milling step are carried out can be different from what is described above. For example, it is possible to firstly carry out the first and the third stage, respectively, on the second and of the third milling step, in order to create the first side wall 15 defining, respectively, the first and the second recess, and then to carry out the second and the fourth stage, respectively, of the second and third milling step, in order to create the second side wall 16 defining, respectively, the first and the second recess.

There is preferably a fourth milling step, as illustrated in figure 14e, during which possible burrs present in the notch 31 formed during the first milling step are eliminated, in order to avoid there being discontinuities or appendages in the finished product, or in the anchoring screw 1, which could hinder the insertion of a metallic wire 7 through the notch 31, or could cause discomfort to the patient.

Advantageously, there is also a fifth milling step, illustrated in figure 14f, during which a first section 35 of the first portion 26 of the metallic shaft, close to the first and to the second recess 30 and 32 and opposite the end face 28 with respect to them, is facetted along a plurality of planes parallel to the longitudinal axis Z of extension of the metallic shaft, forming a polygonal outline.

Through a turning step of the second portion 27 of the metallic shaft a threaded shank 2 is formed in the metallic shaft itself.

Preferably, the turning step is preceded by a countersinking step of a second section 36 of the second portion 27, close to the first section 35 of the first portion 26 of the metallic shaft, in the direction of the threaded shank 2, as illustrated in figure 14g. Such a countersinking step is carried out through turning.

There is then a step of cutting the threaded shank 2, during which a blade proceeds to taper the end of the threaded shank 2 opposite the first portion 26 of the metallic shaft, until it is separated from the remaining part of the metallic shaft.

The notch 31, the first recess 30 and the second recess 32 partially define, with the aforementioned steps, two mushroom-shaped appendages 9, which extend poking out from the common base 18 and each comprises a shaped shank 13, provided with the aforementioned one or more side walls 15 or 16 (two side walls in accordance with the example of the attached figures), and a widened head 14 fixed above the shaped shank 13 and provided with the aforementioned one or more lower faces 17. The widened heads 14 of the appendages define a slit 6, which preferably extends along a transversal direction Y.

A side wall of each shaped shank 13 is intended to receive a metallic wire 7 resting on it, under the lower face 17 of the widened head 14 along at least one housing direction X, inclined with respect to the transversal direction Y of the slit 6.

Advantageously, the turning step and the first, second and third milling steps are carried out through a numerically-controlled lathe-milling machine.

## Claims

1. Orthodontic anchoring screw comprising:
- a threaded shank (2), having prevalent extension along a longitudinal axis (Z), intended to be screwed into a bone tissue;
- a head (3) in a single body with said threaded shank (2), provided with at least one seat (5), which extends substantially along a housing direction (X) perpendicular to the longitudinal axis (Z) of extension of said threaded shank (2), and is intended to house a metallic wire (7) capable of imposing a corrective action to at least one incorrectly positioned tooth (4), said head (3) being provided with engagement means (8), suitable for holding said metallic wire (7) in said seat (5);
**characterised in that** said engagement means (8) comprise at least two shaped appendages (9) extending from a common base (18), each with a shaped shank (13) having a widened head (14) fixed on top;
the widened heads (14) of said shaped appendages (9) defining a slit (6) between them at the top for the insertion of said metallic wire (7), having prevalent extension along a transversal direction (Y), perpendicular to the longitudinal axis (Z) of extension of said threaded shank (2) and inclined with respect to the housing direction (X) of said at least one seat (5); the shaped shanks (13) of said appendages (9) defining, together with said widened heads (14) and with said common base (18), said at least one seat (5), which is in communication with said slit (6) to receive said metallic wire (7).

2. Orthodontic anchoring screw according to claim 1, **characterised in that** the shaped shank (13) of each of said appendages (9) is provided with a first side wall (15) and with a second side wall (16) respectively substantially parallel to the first wall (15) and to the second wall (16) of the other shaped shank (13).

3. Orthodontic anchoring screw according to claim 2, **characterised in that** the head (3) of said screw (1) is provided with a first seat (5') and with a second seat (5"), each of which is defined by a pair of parallel side walls of said shaped shanks (13) and is able to selectively able to receive said metallic wire (7) inside it, along a respective first housing direction (X') and a second housing direction (X").

4. Orthodontic anchoring screw according to claim 2, **characterised in that** the first side wall (15) and the second side wall (16) of each of said shaped shanks (13) are contiguous and form an angle α of at least 90° between them.

5. Orthodontic anchoring screw according to claim 1, **characterised in that** the widened heads (14) of said shaped appendages (9) are provided with two opposite faces (12) that define said slit (6).

6. Orthodontic anchoring screw according to claim 3, **characterised in that** the widened heads (14) of said appendages (9) are provided at the top of each of said side walls with at least one holding portion (10) able to interfere with said metallic wire (7), housed in one of said seats (5), along at least one engagement direction (W) having at least one component parallel to the longitudinal axis (Z) of extension of said threaded shank (2).

7. Orthodontic anchoring screw according to claim 3, **characterised in that** the first housing direction (X') of said first seat (5') and the second housing direction (X") of said second seat (5") define, with the second transversal direction (Y) of extension of said slit (6), two equal acute angles β' and β", preferably each of 45°.

8. Orthodontic anchoring screw according to claims 3 and 5, **characterised in that** the distance L between the two opposite faces (12) of said two appendages (9), which define said slit (6) for accessing said at least one seat (5), is greater than the distance d between said first side walls (15) and than the distance d' between said second side walls (16).

9. Orthodontic anchoring screw according to claim 1, **characterised in that** said metallic wire (7), is intended to be positioned inside said first seat (5') to impose, with elastic return, a twisting moment on said anchoring screw (1), opposite to that which it can impose when it is positioned inside said second seat **(5").**

10. Orthodontic anchoring screw according to claim 3, **characterised in that** said first seat (5') and said second seat (5") are engaged by said metallic wire (7) elastically in abutment against one of said pairs of parallel side walls of said appendages (9) under said holding portions (10).

11. Orthodontic anchoring screw according to claim 1, **characterised in that** the head (3) of said screw (1) is provided with gripping means (19), in particular comprising a portion with polygonal section (20), for a tool suitable for screwing and unscrewing said anchoring screw (1) into and from said bone tissue.

12. Process for making an orthodontic anchoring screw (1), in particular according to the previous claims, **characterised in that** it comprises the following operative steps:
- at least one step of providing a metallic shaft, having prevalent extension along a longitudinal axis (Z);
- at least one first step of milling a first portion (26) of said metallic shaft from an end face thereof (28) substantially perpendicular to the longitudinal axis (Z) of said metallic shaft and obtained by cutting a piece of said shaft itself; said first milling step making a notch (31) through a first milling carried out along a first plane parallel to the longitudinal axis (Z) of prevalent extension of said metallic shaft and centred on it;
- at least one second step of milling said first portion (26) of said metallic shaft made from a first side portion thereof (29), during which second step a first recess (30) in communication with said notch (31) is formed with at least one second milling carried out along a second plane perpendicular to said first plane;
- at least one third step of milling said first portion (26) of said metallic shaft made from a second side portion thereof (33) opposite the first, during which third step a second recess (32) in communication with said first recess (30) and with said notch (31) is formed, with at least one third milling carried out along said second plane; said first recess (30) and said second recess (32) being defined:
- by a common base (18) perpendicular to the longitudinal axis (Z) of prevalent extension of said metallic shaft;
- respectively by at least one side wall (15 or 16) with extension from said common base (18) in the direction of said longitudinal axis (Z);
- respectively by at least one lower face (17) extending transversally from said side wall (15 or 16) according to a plane parallel to said common base (18);
- at least one step of turning a second portion (27) of said metallic shaft, arranged in continuity with said first portion (26), during which a threaded shank (2) is formed;
said notch (31) and said first and second recess (30 and 32) partially defining two mushroom-shaped appendages (9) extending out from said common base (18) and each comprising a shaped shank (13), provided with said at least one side wall (15 or 16), and a widened head (14) fixed above said shaped shank (13) and provided with said at least one lower face (17); the widened heads (14) of said shaped appendages (9) defining a slit (6), which extends preferably along a transversal direction (Y); said at least one side wall (15 or 16) of each shaped shank (13) being intended to receive a metallic wire (7) resting on it above said lower face (17) of said widened head (14) along at least one housing direction (X) that is inclined with respect to the transversal direction (Y) of said slit (6).
